# EUROPÄISCHE PATENTSCHRIFT

(11) **EP 0 442 009 B1**
(45) Veröffentlichungstag und Bekanntmachung des Hinweises auf die Patenterteilung: **03.11.1993**
(21) Anmeldenummer: 90102929.8
(22) Anmeldetag: 15.02.1990
(51) Int. Cl.: G01N 21/74

(54) **Graphitrohrofen mit arretiertem Probenträger für die Atomabsorptionsspektroskopie**
Tubular graphite furnace with a sample carrier with positive location means for atomic absorbtion spectroscopy
Four tubulaire en graphite avec support d'échantillon bloquable pour spectroscopie d'absorption atomique

(43) Veröffentlichungstag der Anmeldung: 21.08.1991
(73) Patentinhaber: Ringsdorff-Werke GmbH, 53170 Bonn (DE)
(72) Erfinder: Hütsch, Bruno, D-5300 Bonn 1 (DE); Schmidt, Bernd, D-5300 Bonn 2 (DE)

(56) Entgegenhaltungen:
- DE-A- 3 722 379
- DE-U- 8 714 926
- FR-A- 2 155 407
- FR-A- 2 634 021
- GB-A- 2 152 234
- GB-A- 2 181 235

## Beschreibung

Die Erfindung betrifft einen Graphitrohrofen für die Atomabsorptionsspektroskopie mit mindestens zwei auf der Ofeninnenwand im Abstand von den Rohrofenenden auf einer Umfanglinie umlaufenden Stegen, in die zum Aufliegen des Probenträgers Nuten eingearbeitet sind und einen in dem Ofen angeordneten, aus Abschnitten bestehenden Probenträger, der mit mindestens einer Vertiefung für die Aufnahme der Analysenprobe versehen ist und im wesentlichen im Abstand von der Innenwand des Graphitrohrofens gehalten ist.

Bei der Atomabsorptionsspektroskopie ist es für die Erzielung von Meßwerten mit vergleichsweise kleiner Streuung vorteilhaft, den Graphitrohrofen und den Probenträger unabhängig voneinander und mit zeitlicher Verzögerung auf die erforderliche Temperatur zu erhitzen, damit die Verdampfung und Atomisierung der Analysensubstanz erst erfolgt, wenn sich die Temperatur innerhalb des Graphitrohrofens stabilisiert hat. Eine derartige Vorrichtung, mit der die Messung der Atomabsorption unter weitgehend reproduzierbaren, definierten Bedingungen gemessen werden konnte, war bereits von L'vov vorgeschlagen worden.

Wegen des mit dieser Anordnung verbundenen, großen Aufwandes für Apparatur und Messung wurden in der Folge verschiedene Vereinfachungen vorgeschlagen.

Bei fast allen diesen abgewandelten Vorrichtungen hat der im Graphitrohrofen angeordnete Probenträger keinen eigenen Widerstandsheizkreis, so daß Probenträger und Probe durch Strahlung sowie einen gewissen Betrag an Joule'scher Wärme und durch Wärmeleitung erhitzt werden.

Die reproduzierbare Einstellung der die Analysengenauigkeit bestimmenden Faktoren, wie die Vermeidung von Temperaturfluktuationen über das Volumen der Küvette, die Verweilzeit der verdampften Analysensubstanz in der Küvette, die Atomisierungszeit und das Verhältnis von Verweilzeit zu Atomisierungszeit, sowie die Verhinderung des Auftretens von Matrixeffekten, d.h. Reaktionen des untersuchten Elements mit anderen Bestandteilen der Analysensubstanz oder des Graphitrohrofens bzw. Probenträgers zu Verbindungen, die in Zonen geringerer Temperatur beständig sind, ist bei diesen Anordnungen von großer Wichtigkeit aber bislang nicht zur vollen Zufriedenheit gelöst.

Ein weiteres Problem ist die sichere Fixierung des Probenträgers im Graphitrohrofen. Dies ist besonders wichtig beim Arbeiten in starken Magnetfeldern, wie z.B. bei der Zeeman-Untergrundkorrektur. Durch die dabei auftretenden Schwingungen kann der Probenträger sogar aus dem Graphitrohrofen bewegt werden.

H. Falk und A. Glismann erkannten, daß die Temperaturdifferenz und die Aufheizrate des Probenträgers bei konstanter Aufheizrate des Graphitrohrofens wesentlich durch elektrische Kontakte zwischen Rohrmantel und Probenträger beeinflußt werden, da ein Teil des Ofenstromes durch den plattenförmigen, auf dem Ofenmantel aufliegenden Probenträger fließt (Fresenius Z. Anal. Chem. (1986) 323, 748 bis 753). Die Wirkung verschiedener Temperaturdifferenzen und Aufheizraten, z.B. bei der Bestimmung kleiner Bleigehalte im Blut haben I.L. Shuttler und H.T. Delves untersucht (J. Analyt. Atomic Spektrometry (1987) 2, 171). Die Streuung der Meßwerte war mit Standardprobenträgern derart groß, daß die Analysenmethode für diese Bestimmung nicht geeignet war. Es gab vor allem beträchtliche Unterschiede in der Auslösezeit des Signals und der integralen Absorption, die offensichtlich auf Unterschiede in der Erhitzungsgeschwindigkeit der Probe zurückgehen. Die Autoren stellten fest, daß die üblichen Probenträger nicht nur durch Strahlung, sondern auch durch Wärmeleitung und Joule'sche Wärme erhitzt werden. Zur Lösung des Problems wird die Entwicklung von Probenträgern vorgeschlagen, die ausschließlich durch Strahlung erhitzt werden und in einer reproduzierbaren Lage im Graphitrohrofen gehalten werden können.

Eine Verbesserung gegenüber den quaderförmigen Standardprobenträgern mit verhältnismäßig großen Berührungsflächen mit dem Graphitrohrofen ist die "Pin-Plattform" (loc.cit.). Dieser Probenträger ruht zur Verkleinerung der Kontaktflächen mit stiftartigen Stützen auf der Mantelfläche des Ofens. Der allgemeinen Anwendung dieser Ausführungsform stehen aber folgende Nachteile entgegen: Die Lage des Probenträgers im Graphitrohrofen ist nicht zwangsläufig festgelegt, so daß sein genauer Ort im Rohrofen vom Bedienungspersonal abhängt, die Erhitzung des Trägers durch Joule'sche Wärme wird nicht vollkommen ausgeschlossen und die stiftartigen Stützen schränken die Werkstoffwahl für den Probenträger wesentlich ein, da sich mit Stiften versehene Probenträger mit vertretbarem Aufwand nur aus besonderen Graphitarten, wie z.B. Glaskohlenstoff herstellen lassen, der sich außerdem nur schwer in der erforderlichen Reinheit herstellen läßt.

Im wesentlichen sind drei Anordnungen des Probenträgers bekanntgeworden, die sich durch verhältnismäßig kleine Berührungsflächen zwischen Rohrmantel und Probenträger auszeichnen und elektrische Leitung und Wärmeleitung zwischen Mantel und Träger erheblich beschränken.

Für die erste Gruppe sind die Ausführungen nach DE-PS 29 24 123 und DE-GM 87 14 926.5 typisch. Nach der DE-PS 29 24 123 hat der Probenträger einen trapezförmigen Querschnitt und liegt in entsprechenden schwalbenschwanz- oder trapezförmigen Ausnehmungen, die in die Wand des Rohrofens eingearbeitet sind. Durch die Einbringung der nutenförmigen Ausnehmungen in die innere Wand des Rohrofens entstehen aber Schwachstellen, die zum frühzeitigen Ausfall führen. Die beim pulsartigen Aufheizen und dem darauf folgenden Abkühlen entstehenden Spannungen führen zu Rissen, die von den Innenkanten der Nuten ausgehen und den Rohrofen unbrauchbar machen. Bei der Ausführungsform nach DE-GM 87 14 926.5 liegt der Probenträger in den Nuten nur mehr entlang einer Linie auf. Durch diese Lösung wird die Erhitzung des Probenträgers durch die Erzeugung Joule'scher Wärme und Wärmeleitung bereits stark vermindert und die Fixierung des Probenträgers im Rohrofen verbessert. Die beschriebene Schwächung des Rohrofenmantels durch die Nuten ist auch hier vorhanden. Die Erhitzung des Probenträgers durch Joule'sche Wärme ist noch immer zu hoch, da ein Ende des Probenträgers noch direkten Kontakt mit der Stromzuführungsvorrichtung des Rohrofens erhalten kann. Schließlich ist die Masse des Rohrofens für eine schnelle Aufheizung noch zu hoch.

In der zweiten Ausführung hat der Probenträger einen Zapfen mit einer kleinen Querschnittsfläche, der in eine Bohrung des Graphitrohres eingesetzt ist und den Probenträger im Abstand vom Rohrmantel hält (DE-OS 35 45 635). Wegen der kleinen Maße und der Sprödigkeit des Werkstoffes Graphit ist für die Herstellung eines solchen Probenträgers hoher Aufwand erforderlich. Aus Gründen der Materialfestigkeit eignet sich nur Glaskohlenstoff für diesen Anwendungsfall. Auf die Nachteile des Glaskohlenstoffs in der Atomabsorptionsspektroskopie wurde im vorstehenden eingegangen. Außerdem treten auch hier an den Halteelementen für den Probenträger unerwünschte Spannungen und Risse auf.

Typisch für die dritte Gruppe ist ein Probenträger, dessen verbreiterter Endabschnitt in Schlitze eingreift, die von einer oder beiden Stirnfläche(n) des Graphitrohres ausgehen. Der probentragende Teil des Trägers ist freihängend im Abstand vom Rohrmantel gehalten (DE-OS 37 22 379, DE-GM 88 03 144.6). Die Ausführungen nach dieser Gruppe vermindern den Wärmefluß zwischen Graphitrohr und Probenträger und ermöglichen die genaue Festlegung des Probenortes relativ zum Graphitrohr. Der Atomisierungsofen nach DE-OS 37 22 379 minimiert auch die Erzeugung von Wärme auf elektrischem Wege im Probenträger. Der Nachteil dieser Ausführungsformen liegt in der Schwächung der thermisch und mechanisch stark belasteten Stirnseite(n) des Rohrofens durch die Ausnehmungen, in die die Probenträger eingreifen. Beim mehrmaligen, schnellen Aufheizen entstehen durch feine Risse Schäden, die ein Reißen des Graphitrohres auslösen. Thermische Ausdehnungskoeffizienten von Probenträger und Rohr bedingen zusätzliche Druckspannungen beim Erwärmen, die zum Abreißen des geschlitzten Abschnitts führen können, eine Schadensursache, die auch bei den Ausführungsformen nach dem ersten und zweiten Rohrofentyp zu Ausfällen führen kann. Zerstörungen durch Lichtbögen sind häufig, wenn die mechanischen Spannungen durch ein zu großes Spiel begrenzt werden.

Ein weiterer, verbessserter Graphitrohrofen mit Probenträger wurde durch die DE-OS 38 23 346.0 bekannt. Hier liegt der Probenträger auf im Inneren der Mantelfläche des Rohrofens umlaufenden Stegen, in die nutenförmige Auflagen eingearbeitet sind. Die Lage des Probenträgers in der Horizontalen ist durch die nutenförmigen Ausnehmungen und einen als Anschlag dienenden, zusätzlichen Steg festgelegt. Die nutenförmigen Ausnehmungen sind nur in die Stege eingearbeitet. Der Rohrmantel wird nicht durch sie geschwächt. Durch die weitere Verringerung der Berührungsflächen zwischen Probenträger und Rohrofen konnte die unerwünschte Aufheizung des Probenträgers durch Wärmeleitung und Joule'sche Wärme weiter vermindert werden. Wenn die Stege symmetrisch zu den Rohrenden angeordnet sind, erhält man einen zentralen Ofenteil, in dem die Einstellung isothermer Bedingungen verbessert ist. Trotz dieser Verbesserungen befriedigt auch dieser Atomisierungsofen noch nicht.

Man beobachtet bei diesem Rohrofentyp einen starken Wärmeabfluß zu den mit den gekühlten Stromanschlüssen verbundenen Rohrofenenden. Dies führt zur Ausbildung von Wärmesenken in dem der Atomisierungszone benachbarten Bereich. Der als Anschlag dienende Steg leistet einen zusätzlichen Beitrag zur Verursachung von Temperaturungleichgewichten. Unter diesen Bedingungen beeinflussen Matrixeffekte die Analysenergebnisse nachteilig. Zusätzlich liegt der Probenträger in den Ausnehmungen der Stege flächig auf und kann elektrischen Kontakt mit der Stromzuführungsvorrichtung an einem Ende des Rohrofens haben. Dadurch wird die Ausbildung scharfer Absorptionssignale gestört. Ein weiterer Nachteil der Anordnung liegt im Fehlen einer Fixierung des Probenträgers gegen Bewegungen senkrecht zu seiner Horizontallage. Eine solche Festlegung jedoch ist für das Arbeiten in stärkeren Magnetfeldern, wie bei der Zeeman-Untergrundkorrektur notwendig.

Es ist Aufgabe der Erfindung, einen Graphitrohrofen und einen dazugehörigen Probenträger zu schaffen, bei denen die beschriebenen Nachteile minimiert sind und die in Herstellung und Verwendung im Rahmen des Aufwandes der gebräuchlichen Ausführungsformen liegen. Insbesondere soll mit der erfindungsgemäßen Lösung
- das Entstehen von Wärmesenken in der Atomisierungszone benachbarter Zonen verhindert,
- eine direkte Kontaktierung des Probenträgers mit der Stromzuführung am Rohrofenende unmöglich gemacht,
- die Aufheizung des Probenträgers durch elektrischen Strom und Wärmeleitung weiter verringert werden,
- eine schnelle, reproduzierbare Atomisierung der Analysenprobe unter weitgehend isothermen Bedingungen gewährleistet sein und
- der Probenträger gegen Bewegungen in allen Richtungen festgelegt sein.

Die Erfindung wird mit einer Vorrichtung der eingangs genannten Art gelöst, wobei der Graphitrohrofen im Inneren, ausgehend von einem Ende hintereinander folgende Zonen aufweist:
Eine Anfangszone I mit einem bestimmten Innendurchmesser,
eine II. Zone mit einem im Vergleich zur Anfangszone größeren Innendurchmesser,
eine III., einen auf einer Umgfangslinie des Ofeninnenrohres umlaufenden Steg bildende Zone, deren Innendurchmesser kleiner ist als der der I. Zone,
eine IV., den Mittelbereich des Graphitrohrofens bildende Zone mit einem Innendurchmesser, der größer als der der III. Zone aber kleiner als der der Anfangszone I ist,
eine V. Zone, die wie die III. Zone ausgebildet ist,
eine VI. Zone, deren Innendurchmesser dem der II. Zone entspricht
und eine VII. Zone mit einem Innendurchmesser, der dem Innendurchmesser der I. Zone entspricht
und wobei
1. der Probenträger aus mindestens einem einem Ende des Graphitrohrofens zugekehrten Endabschnitt und einem sich daran anschließenden Abschnitt besteht, der sich nach dem Einsetzen in den Rohrofen in dessen mittlerem Teil befindet, wobei der Endabschnitt breiter als der sich anschließende Abschnitt ist und so geformt ist, daß er nach dem Einschieben des Probenträgers in die in den umlaufenden Stegen des Graphitrohrofens dafür vorgesehenen, nutenförmigen Auflagen von dem inneren Absatz der Anfangszone I des Rohrofens und der der Zone II des Rohrofens zugewandte Flanke der Zone III an Bewegungen parallel zur Längsachse des Rohrofens gehindert ist und
2. das der Öffnung des Graphitrohrofens zugekehrte Ende des Probenträgers im Abstand vom Ende des Rohrofens endet.

Die Aufteilung des Innenraumes des Rohrofens in Zonen verfolgt mehrere Zwecke. Die I. Zone hat eine Wandstärke, die für die Kontaktierung mit der Stromzuführungseinrichtung geeignet ist. Zone II hat von allen Zonen die geringste Wandstärke und damit auch Querschnittsfläche. Dadurch wird ein zu starker Wärmeabfluß aus den mittleren Teilen des Rohrofens zu den Enden hin und damit das Entstehen von Wärmesenken verhindert. Die vermehrte Entwicklung von Joule'scher Wärme in dieser Zone geringen Querschnitts ist vorteilhaft und verstärkt den gewünschten Effekt. Matrixeffekte werden damit minimiert. Der Absatz am Übergang von Zone I zu Zone II dient als Anschlag für den breiteren Teil des Probenträgers. Dadurch wird der Probenträger in seiner Bewegung zum Rohrofenende hin begrenzt und es wird verhindert, daß er Kontakt mit der Stromzuführungsvorrichtung bekommt.

Die auf Zone II folgende Zone III, der auch Zone V gleich ist, besteht aus einem, auf einer Umfangslinie des Innenrohres umlaufenden Steg. Die Stege der Zonen III und V schließen die Atomisierungszone ein und bilden eine Barriere um das Abfließen der die atomisierte Substanz enthaltenden Gaswolke zu behindern und so die Verweilzeit der Analysensubstanz in der Meßzelle und damit die Analysengenauigkeit zu erhöhen. In die Stege sind außerdem auf einer Ebene unterhalb der Ebene eines waagerechten Schnittes durch die Rohrlängsachse je zwei trapezförmige Nuten in jeden der Stege der Zone III und der Zone V eingearbeitet. In diese Nuten wird der ebenfalls trapezförmige Probenträger eingeschoben, dessen größte Breite ein größeres Maß hat als die Verbindungslinie zwischen den zwei sich gegenüberliegenden Oberflächen der Stege an den Stellen, an denen die trapezförmigen Einschnitte beginnen und wo diese Einschnitte ihre größte Tiefe haben. Durch diese Anordnung ist der Probenträger an vertikalen Bewegungen gehindert und kann durch starke Schwingungen oder Erschütterungen nicht nach oben aus seiner Lage bewegt werden. Die der Rohröffnung zugekehrte Flanke der Stege der Zone III dient zugleich als Anschlag für den breiteren Teil des Probenträgers, begrenzt diesen dadurch in seiner Längsbewegung in Richtung des Rohrinneren und legt ihn zusammen mit dem Anschlag an der Innenseite der Zone I in seiner Lage im Rohrofen gegen jede Bewegung entlang der Ofenlängsachse fest. Die bevorzugte Gestalt der Stege ist die einer stumpfen Pyramide mit einer Breite am Fuß von 2 mm und am Kopf von 1 mm und einer Höhe, gemessen gegen das Niveau der Zone IV von 0,4 mm. Man ist aber nicht auf diese Form und diese Maße festgelegt. Sie können jederzeit den jeweiligen Gegebenheiten angepaßt werden. Es ist auch nicht erforderlich, daß auf die Zone II übergangslos die Stegzone III folgt. Aus Gründen der Einstellung der Temperaturverhältnisse an Zone II, wegen der Einstellung einer bestimmten Rohrlänge oder aus Stabilitätsgründen kann zwischen den Zonen II und III noch eine weitere Zone angeordnet sein, deren Innendurchmesser nicht kleiner als der der Zone I sein darf. Zweckmäßigerweise hat sie den gleichen Innendurchmesser wie Zone I.

Auf die Zone III folgt Zone IV, die auf der anderen Seite vom Steg der Zone V begrenzt ist und die den die Analysenprobe enthaltenden Teil des Probenträgers einschließt. In dieser Zone wird die zu analysierende Substanz durch die von den Ofenwänden ausgehende Wärmestrahlung verdampft und atomisiert. Die entstandene Gaswolke wird für eine gewisse Zeit, während der der spektralanalytische Vorgang abläuft, in dieser Zone gehalten, wobei die beiden begrenzenden Stege unterstützend wirken. Um sicherzustellen, daß zu den Rohrofenenden keine Wärmesenke entsteht und eine verzögerte Aufheizung der Analysenprobe stattfindet, hat diese Zone die größte Wandstärke, d.h., den kleinsten Innendurchmesser.

Auf Zone IV folgt Zone V, die genauso ausgebildet ist wie Zone III. Die sich an Zone V anschließende Zone VI hat die gleiche Wandstärke wie Zone II und erfüllt auch den gleichen Zweck. Auch hier kann zwischen Zone V und Zone VI, wie zwischen Zone II und Zone III noch eine weitere Zone angebracht sein, die in ihrer Ausgestaltung der zwischen Zone II und Zone III liegenden Zone ähnlich ist oder ihr entspricht.

Das zweite Rohrende wird von Zone VII gebildet, deren Durchmesser und Formgebung der Zone I entspricht. Sie dient der elektrischen Kontaktierung am anderen Ende des Rohrofens.

Für die Funktion des Graphitrohrofens ist ein symmetrischer Aufbau besonders vorteilhaft. Die sich entsprechenden Zonen I und VII, II und VI, gegebenenfalls die dann folgenden zwei Zwischenzonen, sowie die Zonen III und V haben in diesem Fall die gleiche Gestalt und jedes Zonenpaar für sich den gleichen Abstand von der Rohrmitte, wobei die Mitte der Zone IV mit der Mitte des Rohrofens übereinstimmt. Bei dieser Ausführungsform ist weitgehend sichergestellt, daß der Ablauf einer Analyse in der gewünschten Art und Weise vonstatten geht und die Störungen, wie zu zeitiges Verdampfen der Analysenprobe, Temperaturinhomogenitäten im Analysenraum (Zone IV), Temperatursenken in Richtung der Ofenenden und Matrixeffekte auf ein zu vernachlässigendes Maß reduziert sind. Abweichungen vom streng symmetrischen Aufbau werden dann notwendig sein, wenn Anpassungen an spezielle apparative oder verfahrenstechnische Gegebenheiten dies notwendig machen. Die Rohrofenkonstruktion bietet hierfür genug Möglichkeiten. So kann z.B. durch Änderung der Maße der Zone II und falls dies vorteilhaft ist, durch Änderungen in Verbindung mit der zwischen Zonen II und III liegenden Zwischenzone der zeitliche und räumliche Temperaturverlauf im Rohrofen verschoben werden.

Der Probenträger besteht aus mindestens zwei zusammenhängenden Abschnitten, einem ersten breiteren, dem Rohrofenende zugekehrten und einem zweiten, schmaleren, der an der Zone III beginnt und nach der Zone V endet. Er ist so ausgebildet, daß er bei hinreichender Handhabungsstabilität möglichst wenig Masse hat und konstruktiv so gestaltet, daß er nach dem Einführen in den Rohrofen gegen Bewegungen in allen drei Richtungen des Raumes festgelegt, sowie im Abstand von der Innenwand des Rohrofens gehalten ist.

Der erste Abschnitt besteht im wesentlichen aus zwei Schenkeln, die vom zweiten Abschnitt ausgehen und die bei in den Rohrofen eingesetztem Probenträger in symmetrischer Anordnung im Abstand von der Ofenwand verlaufen. Die Gesamtbreite des ersten Teils ist so gewählt, daß die Schenkel im Abstand von der Innenwand der Rohrofenzonen II und gegebenenfalls der Zone zwischen den Zonen II und III gehalten werden aber am umlaufenden Steg der Zone III anstoßen. An der Seite des Endes des Rohrofens befinden sich an beiden Schenkelenden Auskragungen, die so angebracht sind, daß sie beim Einschieben des Probenträgers in den Rohrofen an der Außenkante der Zone I anstoßen und nur durch leichtes Biegen der Schenkel über diese Zone geschoben werden können und dahinter sofort wieder in ihre Ausgangslage zurückfedern. Die Auskragungen liegen dann am dem Inneren des Rohrofens zugekehrten Absatz der Zone I an, verhindern ein Herausbewegen des Probenträgers aus seiner Position in Richtung der Zone I und halten so den Probenträger im Abstand von der elektrischen Kontaktierungseinrichtung. Zur Minimierung der Masse dieses Teils des Probenträgers haben die Schenkel gerade die Materialstärke, die für ihre mechanische Stabilität noch ausreichend ist. Die den Ofeninnenwänden zugekehrten Flanken der Schenkel sind zur Einhaltung des erforderlichen Abstandes abgeschrägt.

Der zweite, bezogen auf seine Lage im Rohrofen innere Teil des Probenträgers hat einen trapezförmigen Querschnitt und ist mit einer Vertiefung für die Aufnahme der Analysenprobe versehen. Er wird horizontal bis zum Anschlag der inneren Schulter des ersten Teils des Probenhalters an den Steg der Zone III in die Nuten der Zonen III und V eingeschoben und ist dann, wie im vorstehenden erläutert wurde, gegen Bewegungen in den drei Richtungen des Raumes fixiert. Die zwei spitzen Winkel des Trapezes am Probenträger und an den Nuten der Zonen III und V sind unterschiedlich, damit der Probenträger in den Nuten nur entlang einer Linie aufliegt und sonst im Abstand von der Wand des Rohrofens gehalten ist. Durch diese Ausführungsform werden elektrischer Stromtransport und Wärmeleitung vom Graphitrohrofen in den Probenträger auf ein vernachlässigbares Maß gedrückt. Die Einhängung eines plattenförmigen Probenträgers in trapezförmige Nuten eines Graphitrohrofens, wobei sich nicht parallele Flächen der Nuten des Probenträgers und der Nuten des Graphitrohrofens berühren, ist Gegenstand der Erfindung des DE-GM 87 14 926.5. Dort sind die Nuten jedoch in die Ofenwand eingearbeitet, woraus sich, wie bereits beschrieben wurde, schwerwiegende Nachteile ergeben. Die Art der Formgebung der komplementären Seiten von Probenträger und Nuten wurde dem bezeichneten Gebrauchsmuster entnommen und dient hier zur optimierenden Ausgestaltung der Erfindung.

Bei der Konstruktion von Rohrofen und Probenträger müssen jedem Fachmann geläufige Toleranzen berücksichtigt werden, die nachteilige Wirkungen der thermischen Ausdehnungen der Teile an den Berührungsstellen verhindern.

Erfindungsgemäße Graphitrohröfen können sowohl durch Anschluß elektrischer Kontakte, die in bekannter Weise im wesentlichen an den Stirnseiten der Rohrenden angreifen oder durch seitlich am Rohrmantel angebrachte Kontakte oder mit dem Rohrmantel stoffschlüssig verbundene Kontaktstücke aufgeheizt werden. Beim Aufheizen über die Mantelfläche ist darauf zu achten, daß die Kontaktstücke nicht mit den Zonen III, IV und V verbunden sind. Bei der Aufheizung über die Mantelfläche bietet für die meisten Anwendungsfälle eine Ausführung Vorteile, bei der sich die mit dem Ofenmantel seitlich verbundenen Kontaktstücke in der Ebene eines parallel zur waagerechten Lage des Probenträgers geführten Längsschnittes befinden.

Rohrofen und Probenträger bestehen aus einer beliebigen Graphitsorte, wie Elektrographit, Pyrographit oder Glaskohlenstoff. Bevorzugt wird aus Elektrographit gewonnener Reinstgraphit, der leicht bearbeitbar und nur geringfügig durch Fremdelemente verunreinigt ist. Rohrofen und Träger sind zweckmäßig mit einer dünnen Pyrographitschicht überzogen, die die Graphitteile versiegelt und ihre Abriebfestigkeit verbessert.

Mit Pyrographit ausgekleidete Graphitrohröfen nach dieser Erfindung können auch ohne Probenträger verwendet werden, da die Verdampfungs- und Atomisierungszone IV keine Riefen aufweist und die Stege III und V ein Auseinanderfließen der Probenflüssigkeit auf die Atomisierungszone begrenzen.

Mit dieser Erfindung wurde ein Graphitrohrofen mit Probenträger geschaffen, der folgende Vorteile aufweist bzw. bewirkt:
- Einstellung eines optimierten Temperaturprofils bezüglich des zeitlichen Verlaufs der Analyse und bezüglich der Erstreckung über den Ofenraum.
- Möglichkeit der Anpassung der Zonen des Graphitrohrofens an die jeweiligen analytischen und verfahrenstechnischen Gegebenheiten.
- Vermeidung von unerwünschten Temperatursenken und weitgehende Unterdrückung von Matrixeffekten.
- Zuverlässige Festlegung des Probenträgers gegen Bewegungen in jeder Richtung. Dadurch können auch Analysen in starken elektrischen und magnetischen Wechselfeldern störungsfrei ausgeführt werden.
- Minimierung der Masse des Probenträgers unter Beibehaltung eines Bearbeitungsaufwandes, wie er für Probenträger nach dem Stand der Technik üblich ist.
- Rationelle Herstellbarkeit des Rohrofens durch einfache, im wesentlichen rotationssymmetrische Formen.
- Verwendbarkeit des Konstruktionsprinzips des Graphitrohrofens für eine Aufheizung wahlweise von den Ofenenden oder vom Ofenmantel her.

Die Erfindung wird nachfolgend anhand von Zeichnungen beispielhaft erläutert.

Es zeigen:
- Fig. 1 ,: einen Längsschnitt durch einen Graphitrohrofen.
- Fig. 2A,: eine Ansicht eines Probenträgers von oben.
- Fig. 2B,: die Seitenansicht eines Probenträgers.
- Fig. 2C,: den Querschnitt eines Probenträgers in Ebene IIc - IIc in Fig. 2A.
- Fig. 2D,: eine Detailperspektive der Unterseite des Probenträgers seitlich von vorn gesehen.
- Fig. 3A,: einen Längsschnitt eines Graphitrohrofens in der Ebene III - III der Fig.1 mit eingeschobenem Probenträger.
- Fig. 3B,: als Einzelheit, eine Nut der Zone III mit eingeschobenem Probenträger in perspektivischer Darstellung.
- Fig. 4A,: einen Querschnitt durch den Graphitrohrofen mit eingelegtem Probenträger an Zone II.
- Fig. 4B,: einen Querschnitt durch den Graphitrohrofen mit eingelegtem Probenträger in der Mitte der Zone III.

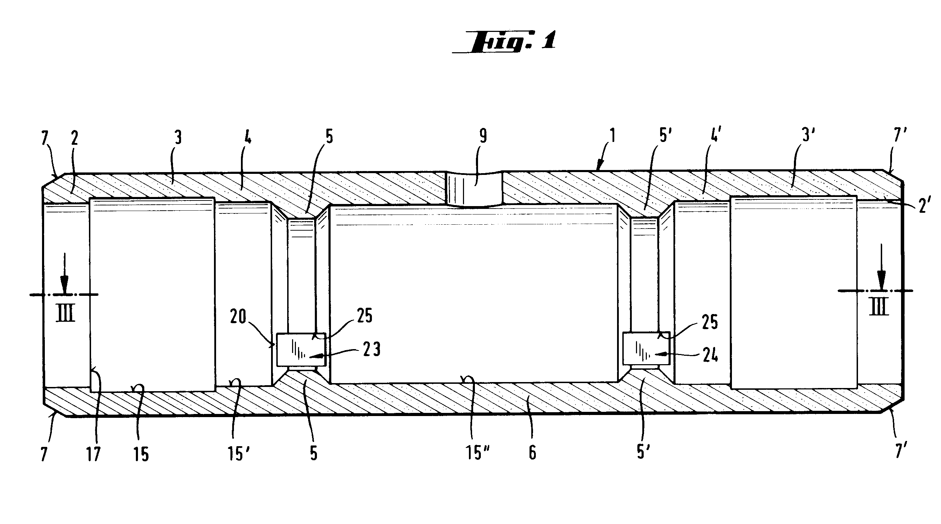

Figur 1 zeigt einen erfindungsgemäßen Graphitrohrofen (1) in einem Längsschnitt. Von den Rohrenden ausgehend nach innen sind die folgenden Zonen angeordnet:
Anfangszone I (2) und Endzone VII (2'), Zone II (3) und VI (3') mit verringertem Wandquerschnitt, die gegebenenfalls vorhandenen zwei Zonen (4, 4') zwischen den Zonen II (3) und III (5) sowie VI (3') und V (5'), die aus umlaufenden Stegen bestehenden Zonen III (5) und V (5') und die mittlere Zone IV (6), in der die Analysensubstanz verdampft und atomisiert wird.

Die Zonen I (2) und VII (2') haben außen für den Anschluß der elektrischen Kontaktierungseinrichtung, die nicht wiedergegeben ist, konusartige Flächen (7, 7'). Zonen II (3) und VI (3') dienen zur Verhinderung von Wärmesenken. Die Zwischenzonen (4) und (4') werden bei Bedarf zur Anpassung des Rohrofens an die speziellen Erfordernisse der Analyseneinrichtung eingeführt und ausgelegt.

In die umlaufenden Stege (5) und (5') sind sich gegenüber und auf gleicher Ebene liegende trapezförmige Nuten (23, 24) eingearbeitet, in die der Probenträger eingeschoben wird. Die mittlere Zone IV (6) ist zur Einbringung der Analysensubstanz mit einer Öffnung (9) versehen.

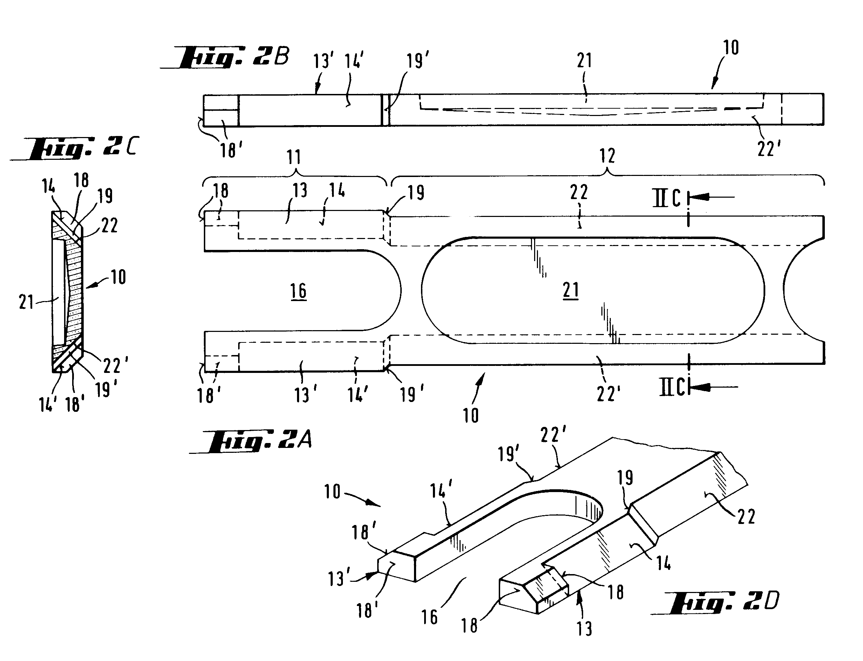

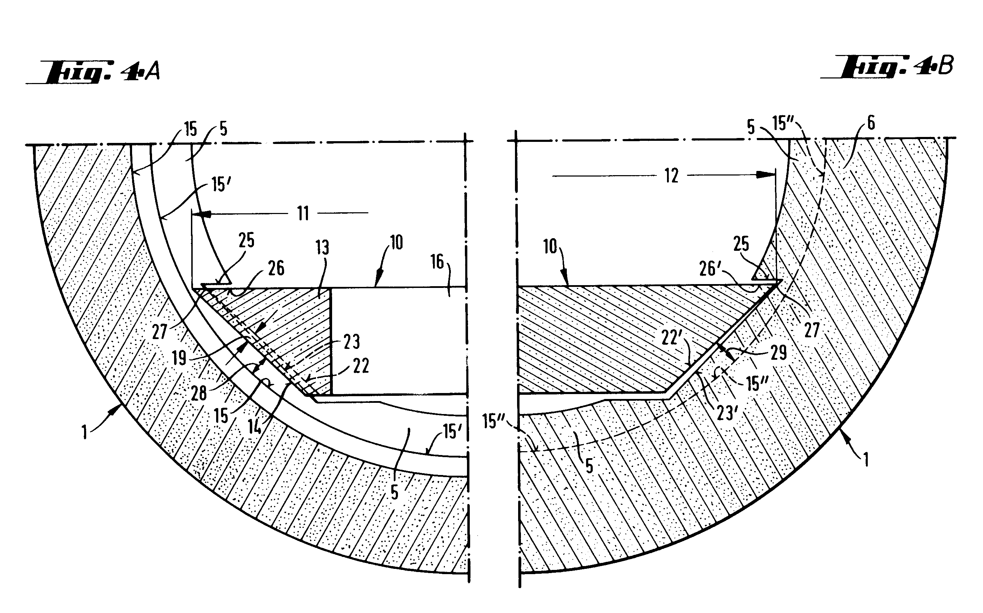

Der Probenträger (10), Fig. 2A bis 2C besteht aus einem breiteren Teil (11) und aus einem schmaleren Teil (12). Der breitere Teil (11) besteht aus zwei Schenkeln (13, 13'), die eine U-förmige Aussparung (16) einschließen und die von dem schmaleren Teil (12) ausgehen. Die Unterseiten der Schenkel (13, 13') haben Abschrägungen (14, 14'), damit die Schenkel (13, 13') im Abstand (28) von der Rohrofenwand (15, 15') gehalten werden können, wie aus Fig. 4A hervorgeht. Zum Arretieren des Probenhalters (10) an dem inneren Absatz (17) der Zone I (2) weisen beide Schenkel (13, 13') am unteren Teil ihrer beiden Enden Auskragungen (18, 18') auf. Die beiden Absätze (19, 19') am Übergang des breiteren in den schmaleren Teil des Probenträgers (10) dienen als Anschlag an die Außenflanken (20) des umlaufenden Steges (5) der Zone III (5) und legen den Probenträger (10) gegen Bewegungen in das Rohrofeninnere fest. Der schmalere Teil (12) des Probenträgers (10) hat eine wannenartige, flache Mulde (21), auf die die Analysensubstanz aufgebracht wird. Die beiden Außenlängsseiten dieses Teils (12) sind mit Abschrägungen (22, 22') versehen, um es im Abstand (29) von der Ofenwand (15'' der mittleren Zone IV) zu halten (vergl. Fig. 4B).

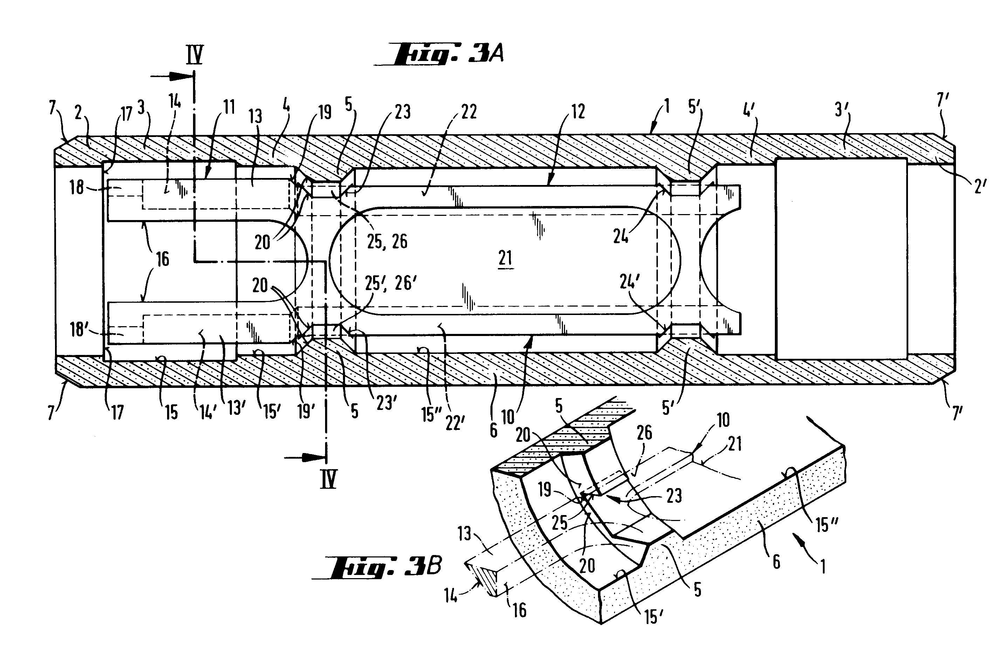

Fig. 3A,B und 4A,B geben die Lage des Probenträgers (10) im Graphitrohrofen (1) wieder und zeigen, daß der Probenträger (10) in den nutenförmigen Ausnehmungen (23, 23', 24, 24') der Stege (5) und (5') aufliegt und die Auskragungen (18, 18') des breiteren Teils (11) des Probenträgers (10) am inneren Absatz (17) der Zone I (2) arretierend anstehen und daß durch den Anschlag der Absätze (19, 19') am Übergang von dem breiteren (11) in den schmaleren (12) Teil des Probenträgers (10) an die äußere Flanke (20) des umlaufenden Steges (5) der Zone III (5) eine Festlegung der Längsbewegung des Probenträgers (10) in die andere Richtung bewirkt wird.

Die Festlegung des Probenträgers (10) in den nutenförmigen Ausnehmungen (23, 23') der Stege (5) und (5') (24, 24') gegen vertikale Bewegungen zeigt Fig. 4B besonders deutlich am Beispiel eines Querschnitts durch den Graphitrohrofen mit eingeschobenem Probenträger (10) in der Mitte des umlaufenden Steges (5) der Zone III (5). Die oberen, waagerechten Seiten (25, 25') der Nuten (23, 23') übergreifen die den Eckkanten benachbarten Zonen (26, 26') des Probenträgers (10) und legen diesen gegen vertikale Bewegungen fest. Die Nuten (23, 23') ergeben im Querschnitt komplementäre Trapezabschnitte. Der Probenträger (10) ist ebenfalls trapezförmig ausgebildet. Die Flächen (25) und (26) berühren sich nicht, so daß ein Kontakt, über den elektrischer Strom oder Wärme fließen kann, nur längs der Berührungslinie (27) besteht. Der Probenträger (10) ist an seiner Oberseite im Verhältnis zur Tiefe der Nuten (23, 23') so breit, daß die oberen, waagerechten Seiten (25, 25') dieser Nuten die oberen Eckkanten (26, 26') des Probenträgers auch bei Vorhandensein eines zur Kompensation der Wärmeausdehnung von Rohrofen und Probenträger notwendigen Spielraumes sicher überdecken.

## Patentansprüche

1. Graphitrohrofen (1) für die Atomabsorptionsspektroskopie mit mindestens zwei auf der Ofeninnenwand im Abstand von den Rohrofenenden auf einer Umfangslinie umlaufenden Stegen (5, 5'), in die zum Aufliegen des Probenträgers (10) Nuten (23, 23', 24, 24') eingearbeitet sind,
mit einem aus Abschnitten (11, 12) bestehenden Probenträger (10), der mit mindestens einer Vertiefung (21) für die Aufnahme der Analysenprobe versehen ist und im wesentlichen im Abstand von der Innenwand (15, 15' 15'') des Graphitrohrofens gehalten ist,
wobei
der Graphitrohrofen (1) im Inneren, ausgehend von einem Ende hintereinander folgende Zonen aufweist:
Eine Anfangszone I (2) mit einem bestimmten Innendurchmesser,
eine II. Zone (3) mit einem im Vergleich zur Anfangszone (2) größeren Innendurchmesser,
eine III., einen auf einer Umfangslinie des Ofeninnenrohres umlaufenden Steg bildende Zone (5), deren Innendurchmesser kleiner ist als der der I. Zone (2),
eine IV., den Mittelbereich des Graphitrohrofens bildende Zone (6) mit einem Innendurchmesser, der größer als der der III. Zone (5) aber kleiner als der der Anfangszone I (2) ist,
eine V. Zone (5'), die wie die III. Zone (5) ausgebildet ist,
eine VI. Zone (3'), deren Innendurchmesser dem der II. Zone (3) entspricht und
eine VII. Zone (7') mit einem Innendurchmesser, der dem Innendurchmesser der I. Zone (2) entspricht
und wobei
1. der Probenträger (10) aus mindestens einem einem Ende des Graphitrohrofens zugekehrten Endabschnitt (11) und einem sich daran anschließenden Abschnitt (12) besteht, der sich nach dem Einsetzen in den Rohrofen (1) in dessen mittlerem Teil (6) befindet, wobei der Endabschnitt (11) breiter als der sich anschließende Abschnitt (12) ist und so geformt ist, daß er nach dem Einschieben des Probenträgers (10) in die in den umlaufenden Stegen (5, 5') des Graphitrohrofens (1) dafür vorgesehenen, nutenförmigen Auflagen (23, 23', 24, 24') von dem inneren Absatz (17) der Anfangszone I (2) des Rohrofens (1) und der der Zone II (3) des Rohrofens (1) zugewandten Flanke (20) der Zone III (5) an Bewegungen parallel zur Längsachse des Rohrofens (1) gehindert ist
und
2. das der Öffnung des Graphitrohrofens zugekehrte Ende des Probenträgers im Abstand vom Ende des Rohrofens endet.

2. Graphitrohrofen nach Patentanspruch 1,
dadurch gekennzeichnet, daß
1. die den Zonen III (5) und V (5') entsprechenden Stege (5, 5') Nuten (23, 23', 24, 24') mit trapezförmigem Querschnitt aufweisen,
2. der Teil des Probenträgers (10), der sich im mittleren Teil (6) des Graphitrohrofens (1) befindet, einen trapezförmigen Querschnitt hat, der so ausgebildet ist, daß der Probenträger (10) nach seinem Einführen in die Nuten (23, 23', 24, 24') der Zonen III (5) und V (5') in seiner Lage nach unten und oben gegen ein Herausbewegen fixiert ist und daß die sich gegenüberliegenden Flächen der Nuten (23, 23', 24, 24') in den Stegen (5, 5') und des Probenträgers (10) eine unterschiedliche Neigung haben.

3. Graphitrohrofen nach den Patentansprüchen 1 und 2,
dadurch gekennzeichnet, daß
der Endabschnitt (11) des Probenträgers (10) zwei Schenkel (13, 13') aufweist, die eine gewisse Elastizität haben und an deren der Öffnung des Rohrofens zugekehrten Ende Auskragungen (18, 18') so angebracht sind, daß sie beim Einschieben des Probenträgers (10) in den Rohrofen (1) nur durch leichtes Biegen der Schenkel über die Zone I (2) geschoben werden können und nach Erreichen der Zone II (3) wieder in ihre Ausgangslage zurückfedern und so Bewegungen des Probenträgers in Richtung der Rohrofenöffnung durch Anschlag am inneren Absatz (17) der Zone I (2) verhindern.

4. Graphitrohrofen nach den Patentansprüchen 1, 2 und 3,
gekennzeichnet durch
eine Gestalt, die sich dadurch ergibt, daß ein aus den Zonen I (2), II (3), III (5) und IV (6) bestehender Rohrofenteil durch einen senkrechten Querschnitt durch die Mitte der Zone IV (6) geteilt wird und das so entstandene Teilstück an der Ebene der senkrechten Querschnittsfläche gespiegelt wird.

5. Graphitrohrofen nach den Patentansprüchen 1 bis 4,
dadurch gekennzeichnet, daß
er eine Formgebung für ein Aufheizen von den Rohrenden her aufweist.

6. Graphitrohrofen nach den Patentansprüchen 1 bis 4,
dadurch gekennzeichnet, daß
er eine Formgebung für ein Aufheizen über seitlich am Rohrmantel angebrachte Kontaktstücke hat.

7. Graphitrohrofen nach den Patentansprüchen 1 bis 4 und 6,
dadurch gekennzeichnet, daß
die in der Ebene eines parallel zur waagerechten Lage des Probenträgers (10) durch die Längsachse des Graphitrohrofens (1) geführten Längsschnitte am Außenmantel des Graphitrohrofens befindlichen Kontaktstücke nicht mit den Zonen III (5), IV (6) und V (5') des Graphitrohrofens (1) verbunden sind.

## Claims

1. Graphite tube furnace (1) for atomic absorption spectroscopy with at least two surrounding flanges (5, 5') on the furnace wall inside on a circumferential line at a distance from the ends of the tube furnace,
in which flanges grooves (23, 23', 24, 24') are incorporated for resting the specimen support (10), the furnace having a specimen support (10) consisting of sections (11, 12) and being provided with at least one recess (21) for the receipt of the analysis specimen and being held essentially away from the internal wall (15, 15', 15'') of the graphite tube furnace,
wherein the graphite tube furnace (1) has, in the interior, zones following one after another starting from one end:
a starting zone I (2) with a specific internal diameter,
a IInd zone (3) with a larger internal diameter in comparison to this starting zone (2),
a IIIrd zone (5) forming a surrounding flange on a circumferential line of the furnace tube inside , the internal diameter of which zone is less than that of the Ist zone (2),
a IVth zone (6) forming the central region of the graphite tube furnace and having an internal diameter which is greater than that of the IIIrd zone (5) but less than that of the starting zone I (2),
a Vth zone (5') which is formed like the IIIrd zone (5),
a VIth zone (3') whose internal diameter corresponds to that of the IInd zone (3),
and a VIIth zone (7') with an internal diameter which corresponds to the internal diameter of the Ist zone (2),
and wherein
1. the specimen support (10) consists of at least one end section (11) facing one end of the graphite tube furnace and a section (12) adjoining thereon which is located after the insertion in the tube furnace (1) in its central part (6), with the end section (11) being wider than the section (12) following on from it and being so shaped that, after pushing in of the specimen support (10) into the groove-shaped supports (23, 23', 24, 24') which are provided therefor in the surrounding flanges (5, 5') of the tube furnace (1), the specimen support (10) is prevented from movements parallel to the longitudinal axis of the tube furnace (1) by means of the inner section (17) of the starting zone I (2) of the tube furnace (1) and by means of the flank (20) of the zone III (5) facing zone II (3) of the tube furnace (1) and
2. the end of the specimen support facing the opening of the graphite tube furnace ends away from the end of the tube furnace.

2. Graphite tube furnace according to claim 1, characterised in that
1. the flanges (5, 5') corresponding to the zones III (5) and V (5') have grooves (23, 23', 24', 24') with trapezoidally-shaped cross-section,
2. the part of the specimen support (10) which is located in the central part (6) of the graphite tube furnace (1) has a trapezoidally-shaped cross-section which is so formed that the specimen support (10), after its guiding into the grooves (23, 23', 24, 24') in zones III (5) and V (5') is secured in its position below and above against outward movement and that the surfaces of the grooves (23, 23', 24, 24') in the flanges (5, 5') and the specimen support (10) lying opposite one another have a different inclination.

3. Graphite tube furnace according to claims 1 and 2, characterised in that the end section (11) of the specimen support (10) has two webs (13, 13') which have a certain resilience and at whose ends facing the opening of the tube furnace cantilevers (18, 18') are so applied that, on pushing in of the specimen support (10) into the tube furnace (1) they can only be pushed through gentle angles of the webs over the zone I (2) and after reaching zone II (3) spring back into their starting position and so prevent movements of the specimen support in the direction of the tube furnace opening by abutment against the inner section (17) of the zone I (2).

4. Graphite tube furnace according to claims 1, 2 and 3, characterised by a format which is so obtained that a tube furnace part consisting of zones I (2), II (3), III (5) and IV (6) is divided by means of a vertical section through the centre of zone IV (6) and the portion so obtained is mirrored at the plane of the vertical cross-sectional surface.

5. Graphite tube furnace according to claims 1 to 4, characterised in that it has a structure for heating of the tube ends.

6. Graphite tube furnace according to claims 1 to 4, characterised in that it has a structure for heating via contact pieces laterally applied to the tube wall.

7. Graphite tube furnace according to claims 1 to 4 and 6, characterised in that the contact pieces located at the wall exterior of the graphite tube furnace in the plane of a longitudinal section directed parallel to the horizontal position of the specimen support (10) through the longitudinal axis of the graphite tube furnace (1) are not connected with the zones III (5), IV (6) and V (5') of the graphite tube furnace (1)

## Revendications

1. Four tubulaire en graphite (1) destiné à la spectroscopie par absorption atomique comportant
- sur la paroi interne du four au moins deux nervures périphériques (5, 5') situées à une certaine distance des extrémités du four et présentant des rainures (23, 23', 24, 24') servant à recevoir le porte-échantillon (10),
- un porte-échantillon fait de deux sections (11, 12) et muni d'au moins une cavité (21) servant à recevoir l'échantillon à analyser, ce porte-échantillon étant maintenu éventuellement à une certaine distance de la paroi interne (15, 15', 15'') du four,
- a l'intérieur du four (1) plusieurs zones successives, à savoir, en partant d'une extrémité,
. une zone d'entrée I (2) présentant un certain diamètre interne,
. une zone II (3), de diamètre interne supérieur au précédent,
. une zone III (5) délimitée par une nervure périphérique de la paroi interne du four, de diamètre interne inférieur à celui de la zone I,
. une zone IV (6), située dans la partie médiane du four, de diamètre interne supérieur à celui de la zone III (5), mais inférieur à celui de la zone I (2),
. une zone V (5'), identique à la zone III (5),
. une zone VI (3') de diamètre interne égal à celui de la zone II (3),
. une zone VII (7') de diamètre interne égal à celui de la zone I (2),
- dans le porte-échantillon, au moins une section d'extrémité (11) faisant face à une extrémité du four et raccordée à une autre section (12) qui vient au niveau de la partie médiane (6) de celui-ci lorsqu'on y place le porte-échantillon, la section d'extrémité (11) étant plus large que le secteur (12) qui lui fait suite et présente une forme telle, qu'après engagement du porte-échantillon (10) dans les paliers (23, 23', 24, 24'), en forme de rainures, prévus à cet effet dans les nervures périphériques (5, 5') du four (1), tout déplacement parallèle à l'axe longitudinal du four se trouve interdit par le rebord interne (17) de la zone d'entrée I (2) du four et par le flanc (20) de la zone III (5) en regard de la zone II (3) du four.
- un certain intervalle entre l'extrémité du porte-échantillon faisant face à l'ouverture du four et l'extrémité de celui-ci.

2. Four tubulaire en graphite selon la revendication 1, caractérisé en ce que :
1. les nervures (5, 5') correspondant aux zones III (5) et V (5') présentent des rainures (23, 23', 24, 24') de forme trapézoïdale,
2. la partie du porte-échantillon, située dans la zone médiane (6), du four, a une section de forme trapézoïdale constituée de manière que le porte-échantillon (10), après qu'il ait été engagé dans les rainures (23, 23', 24, 24') des zones III (5) et V (5'), a sa position assurée contre tout déplacement vers le haut ou vers le bas, les surfaces en regard des rainures (23, 23', 24, 24') des nervures (5, 5') et du porte-échantillon (10) présentant des parties différentes.

3. Four tubulaire de graphite selon les revendications 1 et 2, caractérisé en ce que la section d'extrémité (11) du porte-échantillon (10) présente deux branches (13, 13') disposant d'une certaine élasticité et portant, à leurs extrémités en regard de l'ouverture du four, des saillies (18, 18') qui, lorsqu'on introduit le porte-échantillon (10) dans le four (1) peuvent, en pliant légèrement, traverser la zone I (2) et revient, une fois parvenues dans la zone II (3), à leurs positions initiales et ainsi, parvenue en butée contre le gradin interne (17) de la zone I (2), empêcher le déplacement du porte-échantillon vers l'ouverture du four.

4. Four tubulaire en graphite selon les revendications 1, 2 et 3, caractérisé en ce qu'une partie du four tubulaire est constitué des zones I (2), II (3), III (5) et IV (6), est divisée par une section verticale au milieu de la zone IV (6) l'élément tubulaire ainsi obtenu étant symétrique par rapport au plan transversal vertical.

5. Four tubulaire en graphite selon les revendications 1 à 4, caractérisé en ce qu'il est conçu pour être chauffé à partir de ses extrémités.

6. Four tubulaire selon les revendications 1 à 4, caractérisé en ce qu'il est conçu pour être chauffé par l'intermédiaire de pièces de contact disposées latéralement sur son enveloppe tubulaire.

7. Four tubulaire en graphite selon les revendications 1 à 4 et 6, caractérisé en ce que les pièces de contact situées sur la paroi externe du four, dans un plan de section longitudinale du four parallèle à la position horizontale du porte-échantillon (10), ne sont pas reliées aux zones III (5), IV (6) et V (5') du four.
